# EUROPÄISCHE PATENTSCHRIFT

(11) **EP 1 403 110 B1**
(45) Veröffentlichungstag und Bekanntmachung des Hinweises auf die Patenterteilung: **08.06.2005**
(21) Anmeldenummer: 03019558.0
(22) Anmeldetag: 02.09.2003
(51) Int. Cl.: B60J 5/04

(54) **Fahrerkabine**
Driver's cab
Cabine de chauffeur

(30) Priorität: 26.09.2002 DE 10244796
(43) Veröffentlichungstag der Anmeldung: 31.03.2004
(73) Patentinhaber: DaimlerChrysler AG, 70567 Stuttgart (DE)
(72) Erfinder: Fischer, Herbert, 71263 Weil der Stadt (DE)

(56) Entgegenhaltungen:
- DE-A- 19 943 539
- US-A- 4 850 636
- US-A- 5 820 191

## Beschreibung

Die Erfindung betrifft eine Fahrerkabine für einen Lastkraftwagen, mit einer bezüglich der Fahrtrichtung linken und einer rechten Seitenwand und mit den Merkmalen des Oberbegriffs des Anspruchs 1. Die Erfindung betrifft außerdem ein Baukastensystem für den Zusammenbau der Seitenwand einer derartigen Fahrerkabine.

Fahrerkabinen dienen im allgemeinen bei Lastkraftwagen zur Aufnahme eines Fahrer-/Beifahrerplatzes und eines eventuell in Fahrtrichtung hinter dem Fahrer-/Beifahrerplatz angeordneten Schlafplatzes. Je nach Ausführungsform des Lastkraftwagens, z.B. als Baustellenfahrzeug oder als Fernlastkraftwagen, ergibt sich eine den jeweiligen Anforderungen entsprechende Kabinenform.

Aus der DE 36 17 961 A1 ist eine Konzeption für eine Fahrerhausbaureihe für Frontlenker-Lastkraftwagen mit nach vorn kippbaren Fahrerhäusern unterschiedlicher Größe bekannt. Dabei wird ein aus zwei Seitenteilen, einer Frontwand, einer Rückwand, einer Dach- und einer Bodengruppe zusammengesetztes Rohhaus durch eine Anzahl standardisierter Funktionsmodule ergänzt, die unverändert an Fahrerhäusern unterschiedlicher Größe am hierfür entsprechenden Rohhaus anbaubar sind. Der komplette Einstieg ist vom Fahrerhaus getrennt am Fahrgestellrahmen befestigt. Hierbei ist vorgesehen, die beiden Seitenteile des Rohhauses und die Fahrzeugtüren als einstückige und für alle Fahrerhaus-Varianten gleiche Blechpressteile auszubilden und die Seitenwände mit einem entsprechenden einheitlichen Türausschnitt zu versehen. Dadurch sind zwar die Seitenteile mit den komplizierten Türausschnitten und die Türen mit immer den gleichen Werkzeugsätzen herstellbar, eine nachträgliche Variation der Seitenteile und der Türen für unterschiedliche Fahrzeugtypen ist jedoch nicht vorgesehen.

Aus der gattungsgemäßen DE 199 43 539 A1 ist eine Fahrerkabine für einen Lastkraftwagen bekannt, deren Innenraum durch ein Modul vergrößerbar ist, das wenigstens ein zur Außenhaut und zur Fahrerkabine gehörendes Abdeckelement umfasst, und zur Vergrößerung des Kabinenvolumens aus einer eingefahrenen Gebrauchsstellung in eine ausgefahrene Gebrauchsstellung verstellbar ist. Hierbei ist der freie Raum zwischen den Umfangsseiten des Moduls und den korrespondierenden Umfangsseiten der Fahrerkabine in der ausgefahrenen Gebrauchsstellung durch Abdeckmittel geschlossen. Das Modul umfasst mindestens einen Wandbereich einer Stirnwand der Fahrerkabine und ist in der ausgefahrenen Gebrauchsstellung in Fahrzeuglängsrichtung verlagert. Hierdurch können zwar die Außenabmessungen der Fahrerkabine verändert werden, eine Änderung des äußeren Erscheinungsbildes bei ansonsten unveränderten Kabinenabmessungen ist jedoch nicht möglich.

Aus der DE 35 45 502 A1 ist eine Seitenwandkarosserie eines Fahrerhauses für einen Lastkraftwagen bekannt, welche in ihrem hinteren, unteren Bereich eine Aussparung aufweist, in der, von unten einbaubar, von beiden Seiten vorzugsweise Staukästen oder aber auch andere Gerätschaften, wie z.B. Tanks, Gasflaschen, Zusatzleitungen oder anderes, anbringbar sind, wobei die in der Aussparung anbringbaren Teile ohne Veränderung der Seitenwandkarosserie auswechselbar sind.

Die vorliegende Erfindung beschäftigt sich mit dem Problem, für eine Fahrerkabine eingangs erwähnter Art eine verbesserte Ausführungsform anzugeben, wobei insbesondere eine preiswerte Variantenbildung für die Fahrerkabinen erreicht werden soll.

Dieses Problem wird durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer Fahrerkabine wenigstens eine der Seitenwände modular aufzubauen und, insbesondere mittels eines Baukastensystems, mit einer gleichbleibenden Fahrerhausstruktur auszustatten, an dem eine variierbare Verblendung anbringbar ist. Damit sich dabei eine ästhetischen Ansprüchen genügende Optik ergibt, wird erfindungsgemäß vorgeschlagen, bei einer bezüglich der Fahrtrichtung linken und einer rechten Seitenwand, die jeweils eine mit einem Seitenfenster und mit einem Türaußengriff ausgestattete Fahrzeugtür sowie einen in Fahrtrichtung nach hinten daran anschließenden Wandabschnitt, mit jeweils einem Außenblech, aufweist, an der Fahrzeugtür und am Wandabschnitt einen Absatz vorzusehen, der jeweils zwischen dem Seitenfenster und dem Türaußengriff verläuft. Die beiden Absätze erstrecken sich zueinander fluchtend in der jeweiligen Fahrzeugtür und im zugehörigen Wandabschnitt, wobei die jeweilige Fahrzeugtür und der zugehörige Wandabschnitt jeweils in einen oberen, weiter auskragenden Außenbereich und einen unteren, nach innen versetzten Innenbereich unterteilt ist. Der letztgenannte Innenbereich der Fahrzeugtür trägt dabei eine Türblende, während der Innenbereich des Wandabschnitts eine Wandblende trägt.

Diese Maßnahmen bieten den Vorteil, dass bei einem gleichbleibenden Seitenwandrohbau und Türgrundmodul, durch Anordnung unterschiedlicher Tür- und/oder Wandblenden, ein unterschiedliches äußeres Erscheinungsbild der Fahrerkabine erzeugt werden kann. Hierdurch kann neben einer einfachen Designänderung, ohne Änderung des Seitenwand- und Türrohbaus, auch eine Weiterführung der Kabinengesichtsgestaltung ab der Eckbeplankung, ein einfaches Lackierkonzept, eine einfache Differenzierung zwischen verschiedenen Fahrzeugtypen, wie z.B. Baustellen- und Verteilerfahrzeugen, sowie eine erhöhte Reparaturfreundlichkeit realisiert werden. Durch eine einheitliche Ausbildung eines Grundkörpers für die Fahrzeugtür und die Seitenwand verbunden mit einer oben beschriebenen, je nach Fahrzeugtyp variabel zu gestaltenden Türen- und Wandblende, lässt sich die Anzahl der zur Produktion der Fahrzeugtüren und der Seitenwände benötigten Form- und/oder Stanzwerkzeuge erheblich reduzieren, was zu einer Senkung der Kosten führt.

Entsprechend einer besonders günstigen Ausführungsform kann vorgesehen sein, dass wenigstens eine Tür- oder Wandblende als Kunststoff- und/oder Leichtmetallteil ausgebildet ist. Die Verwendung von Kunststoffen im Karosseriebau bietet vor allen Dingen bei der Formgebung, die bei Kunststoffen nahezu unbegrenzt möglich ist, große Vorteile. Zudem bietet Kunststoff ebenso wie Leichtmetall, im Vergleich zu herkömmlichem Stahlblech, hinsichtlich des Gewichts und der damit verbundenen Einsparungen beim Energieverbrauch günstige Eigenschaften.

Zweckmäßig kann vorgesehen sein, dass wenigstens eine Türoder Wandblende mit geeigneten Befestigungsmitteln an der Fahrzeugtür und/oder an dem Wandabschnitt lösbar befestigt ist. Denkbar sind z.B. Schraub-, Haken- und/oder Clipverschlüsse, mit denen die Tür-/Wandblenden einfach an der Fahrzeugtür und/oder dem Seitenwandabschnitt zu befestigen und davon zu entfernen sind. Dies bietet den besonderen Vorteil, dass nach leichteren Unfällen lediglich die beschädigte Tür- und/oder Wandblende ausgetauscht werden muss. Durch die leicht lösbaren Tür-/Wandblenden kann im Reparaturfall der Arbeitsaufwand deutlich reduziert werden; Lackier- und/oder Ausbeularbeiten, wie bei herkömmlichen Karosseriebauteilen aus Stahlblech, können ganz entfallen, wodurch ebenfalls Kosten eingespart werden können.

Eine vorteilhafte Weiterbildung zeichnet sich dadurch aus, dass die Tür- und/oder Wandblende als Seitenaufprallschutz ausgebildet ist. Besonders bei seitlichen Unfällen mit Fahrradfahrern, welche häufig keinen Kopfschutz tragen, senkt eine weiche, leicht deformierbare und damit Energie absorbierende Aufprallzone im Bereich der Tür- und/oder Wandblende das Risiko von Kopfverletzungen.

Bei einer weiteren vorteilhaften Ausgestaltung der erfindungsgemäßen Lösung kann vorgesehen sein, dass zumindest eine Tür- und/oder Wandblende einen Staukasten enthält und dass in wenigstes eine Tür- und/oder Wandblende eine schwenkverstellbare Klappe integriert ist. Hierdurch kann zusätzlicher Stauraum, z.B. für Frachtpapiere, Werkzeug oder Erste-Hilfe-Vorrichtungen, bereitgestellt werden. Besonders die Unterbringung von Erste-Hilfe-Kästen in einem von außen zugänglichen und bei allen Fahrerkabinen einheitlich angeordnetem Staufach bietet den Vorteil, dass im Notfall ein bei allen Fahrerkabinen einheitlicher Platz und somit ein schneller Zugriff auf den Erste-Hilfe-Kasten möglich ist.

Weitere wichtige Merkmale und Vorteile der Erfindung ergeben sich aus den Unteransprüchen, aus den Zeichnungen und aus den zugehörigen Figurenbeschreibungen anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in den nachfolgenden Beschreibungen näher erläutert, wobei sich gleiche Bezugszeichen auf gleiche oder ähnliche oder funktional gleiche Bauteile beziehen.

Die Figuren zeigen schematisch,
- Fig. 1: eine perspektivische Seitenansicht einer Fahrerkabine mit einer Tür- und Wandblende,
- Fig. 2: eine Seitenansicht wie in Fig. 1, jedoch mit einer anderen Tür- und Wandblende,
- Fig. 3: eine Seitenansicht wie in Fig. 1, jedoch mit einer Tür- und Wandblende mit einem Staukasten,
- Fig. 4: eine Seitenansicht wie in Fig. 1, jedoch mit einer weiteren Tür- und Wandblende,
- Fig. 5: einen Querschnitt durch eine Fahrzeugtür mit einer Türblende.

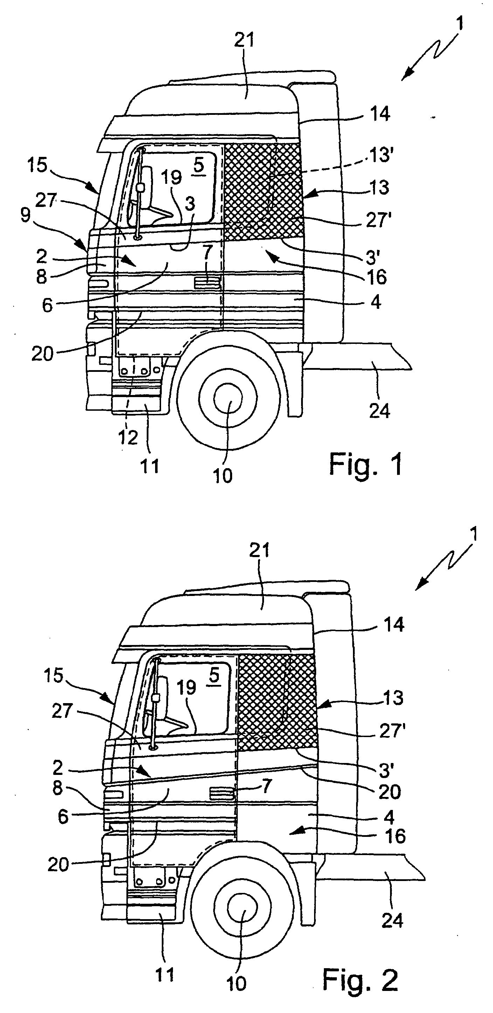

Entsprechend Fig. 1 weist eine Fahrerkabine 15 eines im übrigen nicht dargestellten Lastkraftwagens 1 eine Frontpartie 9, eine Heckpartie 14, ein Dachmodul 21, eine linke Seitenwand 13 und eine in Fig. 1 nicht dargestellte rechte Seitenwand 13' mit jeweils einer Fahrzeugtür 2 auf. Die Fahrerkabine 15 kann dabei aus den oben genannten. Komponenten nach einem Baukastensystem zusammengesetzt werden und kann Bestandteil einer, einen Auflieger oder einen Anhänger ziehenden Zugmaschine sein.

In die Fahrzeugtür 2 sind jeweils ein Seitenfenster 5 und ein Türaußengriff 7 zum Öffnen der Fahrzeugtür 2 integriert. In Verlängerung an die Fahrzeugtür 2 ist im unteren Bereich, in Fahrtrichtung vor der Fahrzeugvorderachse 10, eine Einstiegshilfe 11 angeordnet, die mit einer Fahrzeugkarosserie 24 verbunden ist. Durch Öffnen der Fahrzeugtür 2 wird ein Durchgang zu einem in der Fahrerkabine 15 gelegenen Fahrerplatz 19 frei. Eine Türinnenlinie 12, die bei allen Ausführungsformen (vgl. Fig. 1 bis Fig. 4) identisch ist, umfasst dabei den bei geöffneter Fahrzeugtür 2 freigegebenen Durchgang zum Fahrerplatz 19.

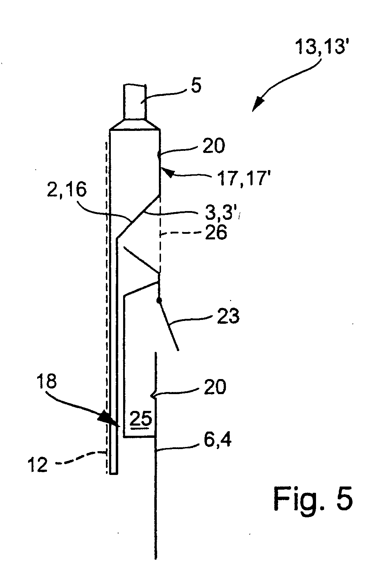

Die Seitenwand 13 weist sowohl an der Fahrzeugtür 2 als auch an einem in Fahrtrichtung dahinter liegenden Wandabschnitt 16 jeweils ein Außenblech 27 bzw. 27' auf, das jeweils zwischen dem Seitenfenster 5 und dem Türaußengriff 7, einen Absatz 3 bzw. 3' besitzt. Die Erstreckung des Wandabschnitts 16 in Fahrzeuglängsrichtung wird dabei dem jeweiligen Verwendungszweck des Lastkraftwagens 1 angepasst. Der Absatz 3 unterteilt die Fahrzeugtür 2 und der Absatz 3' unterteilt den zugehörigen Wandabschnitt 16 der jeweiligen Seitenwand 13, 13', in einen oberen, weiter ausgekragenden Außenbereich 17 bzw. 17' und einen unteren, nach ihnen versetzten Innenbereich 18 bzw. 18' (vgl. Fig. 5). Die beiden Absätze 3, 3' in der Fahrzeugtür 2 und im Wandabschnitt 16 verlaufen fluchtend zueinander und schließen an eine Eckbeplankung 8 an, die die Frontpartie 9 und die jeweilige Seitenwand 13, 13' formfortführend verbindet. Dadurch ist eine Weiterführung der Gesichtsgestaltung des Lastkraftwagens 1 über die Eckbeplankung 8 und die Fahrzeugtür 2 sowie den Wandabschnitt 16 bis zur Heckpartie 14 möglich.

Am Innenbereich 18 der Fahrzeugtür 2 und des Wandabschnitts 16 ist an der Außenseite eine entsprechende Türblende 6 bzw. eine Wandblende 4 angeordnet, die mit geeigneten Befestigungsmitteln an der Fahrzeugtür 2 bzw. am Wandabschnitt 16 lösbar befestigt ist. Im Falle einer Beschädigung kann die Tür- und/oder Wandblende 6, 4 problemlos ausgetauscht werden. Neben der Ausbildung der Türund/oder Wandblende 6, 4 als Kunststoff und/oder (Leicht-) Metallteil, wodurch eine Gewichtsreduktion erreicht werden kann, ist auch die Ausbildung der Tür- und/oder Wandblende 6, 4 als Seitenaufprallschutz vorgesehen, um Unfallfolgen vor allem für Fahrradfahrer zu mildern.

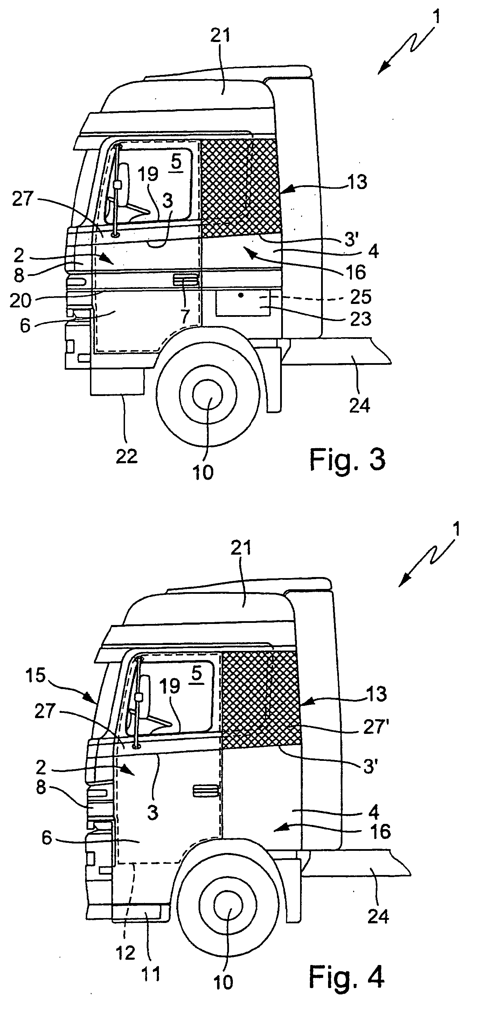

Die unterhalb des Absatzes 3 an der Fahrzeugtür 2 angebrachte Türblende 6 weist zumindest eine, im wesentlichen horizontal verlaufende, Designlinie 20 auf. Diese Designlinie 20 kann fortlaufend über die Türblende 6 und die Wandblende 4 bis zur Heckpartie 14 angeordnet sein (vgl. Fig. 1 und Fig. 3) oder aber auf die Türblende 6 und/oder die Wandblende 4 beschränkt sein (vgl. Fig. 2).

Die Designlinien 20 verlaufen in den dargestellten Fig. 1 bis Fig. 4 im wesentlichen horizontal und parallel, es ist jedoch auch ein geschwungener und/oder nicht horizontaler und paralleler Verlauf denkbar. Die Wandblende 4 kann so ausgebildet sein, dass sie die Designlinien 20 der Türblende 6 bis zur Heckpartie 14 geradlinig weiter führt. Ebenso ist jedoch auch eine glatte Oberflächenausführung der Türblende 6 und/oder der Wandblende 4 oder eine Änderung des Verlaufs der Designlinien 20 (vgl. Fig. 2) prinzipiell möglich, wodurch sich sowohl die Türblende 6 als auch die Wandblende 4 als Designelement verwenden lassen.

Durch eine entsprechende Anordnung der zumindest einen Designlinie 20 und des Absatzes 3, 3' sowie eine Form- und Farbgebung der Tür- und Wandblenden 6, 4 ist eine individuelle Gestaltung der Fahrerkabine 15 möglich. Desweiteren ist eine Verlängerung der Fahrzeugtür 2 in Richtung der unterhalb der Fahrzeugtür 2 angeordneten Einstiegshilfe 11, durch eine entsprechende Verlängerung der Türblende 6, ohne Änderung des Grundkörpers der Fahrzeugtür 2 möglich (vgl. Fig. 3 und Fig. 4).

Die Türblende 6 und die Wandblende 4 legen zusammen mit der Einstiegshilfe 11 zudem die äußere sichtbare Größe eines von ihnen teilweise umfassten Radkastens fest.

In der Fig. 3 ist eine Ausführungsform der Fahrerkabine 15 für ein Baustellenfahrzeug dargestellt. Die Türblende 6 steht im unteren Bereich der Fahrzeugtür 2 nur geringfügig über die Türinnenlinie 12 hinaus, so dass eine für Baustellenfahrzeuge wichtige, große Bodenfreiheit erreicht werden kann. Die Einstiegshilfe 11 ist durch einen einfachen aber robusten Steigbügel 22 ersetzt. Ebenfalls in seinem unteren Bereich verkürzt ist die Wandblende 4, wodurch die Geländegängigkeit des Lastkraftwagens 1 verbessert wird.

Gemäß der Fig. 3 trägt die Wandblende 4 eine schwenkverstellbare Staukastenklappe 23, welche einen Zugang zu einem dahinter liegenden Staukasten 25, der entweder in die Wandblende 4 oder in das hinter der Wandblende 4 liegende Außenblech 27' integriert ist, öffnet und verschließt. Besonderes bei der Ausführungsform als Baustellenfahrzeug ist ein solcher Staukasten 25 zur Aufbewahrung von Werkzeug und/oder anderen Gegenständen besonders günstig.

Entsprechend der Fig. 1 bis Fig. 4 weist die Fahrzeugtür 2 einen bei allen Ausführungsformen gleichen Grundkörper auf, der im wesentlichen von der Türinnenlinie 12 umrandet ist. Durch Anbringen unterschiedlicher Türblenden 6 und/oder Wandblenden 4 kann das äußere Erscheinungsbild der Fahrerkabine 15 und damit des Lastkraftwagens 1 variiert werden. Dadurch ist es möglich, unterschiedlichste Fahrzeugtypen, wie z.B. Verteilerfahrzeuge und Baustellenfahrzeuge, durch unterschiedliche Tür- und/oder Wandblenden 6,4, bei ansonsten unveränderter Fahrzeugtür 2 und Seitenwand 13, 13', darzustellen.

Da eine Modifikation der Seitenwände 13, 13' sowie des Grundkörpers der Fahrzeugtür 2 entfällt, können für mehrere Fahrzeugtypen die gleichen Stanz- und Formwerkzeuge für die Grundkörper der Fahrzeugtür 2 und der Seitenwand 13 benutzt werden, was zu einer Reduzierung der Kosten führt. Gleichzeitig ist es möglich, bei leichteren Unfällen oder Beschädigungen lediglich die beschädigte Tür- und/oder Wandblende 6, 4 auszutauschen, was Reparaturkosten senkt.

Entsprechend Fig. 5 ist exemplarisch ein Querschnitt durch die Fahrzeugtür 2 mit der Türblende 6 dargestellt. Ein Querschnitt durch den Wandabschnitt 16 mit der entsprechenden Wandblende 4 ist vergleichbar und deshalb nicht näher ausgeführt.

Wie in Fig. 5 dargestellt weist das Außenblech 27 der Fahrzeugtür 2 unterhalb des Seitenfensters 5 einen Absatz 3 auf. Am unterhalb des Absatzes 3 gelegenen Innenbereich 18 ist eine Türblende 6 angeordnet und mit geeigneten, in Fig. 5 nicht dargestellten, Befestigungsmitteln an der Fahrzeugtür 2 befestigt. Der zwischen der Türblende 6 und dem Innenbereich 18 der Fahrzeugtür 2 gelegene Zwischenraum kann entweder, wie in Fig. 5 dargestellt einen Staukasten 25 aufnehmen oder ohne Staukasten 25 als Hohlraum ausgebildet sein. Im Fall eines Staukastens 25 ist in die Türblende 6 eine Staukastenklappe 23 integriert. Prinzipiell ist aber auch eine Anordnung des Staukastens 25 in der Fahrzeugtür 2 möglich.

Entsprechend Fig. 5 kann die Türblende 6 auch über die Fahrzeugtür 2, die in ihren Abmessungen im wesentlichen durch die Türinnenlinie 12 begrenzt ist, nach unten fortgeführt werden. Auf dem Außenbereich 17 oder der Türblende 6 können zudem Designlinien 20 in Form einer kleinen, länglichen Einkerbung oder durch lediglich farbliche Hervorhebung, angeordnet sein.

Die Form der Türblende 6 lässt sich frei gestalten und kann mit einer Einkerbung am Absatz 3 oder, wie durch die gestrichelte Linie 26 in Fig. 5 dargestellt, ebenengleich oder fluchtend an den Außenbereich 17 angeschlossen werden.

Mit der erfindungsgemäßen Lösung ist durch die Verwendung unterschiedlicher Tür- und Wandblenden 6, 4, bei ansonsten unverändertem Grundkörper der Fahrzeugtür 2 und der Seitenwand 13, 13', das äußere Erscheinungsbild der Fahrerkabine 15 optisch variierbar. Es ist dadurch möglich unterschiedliche Fahrzeugtypen, wie z.B. Baustellen- und Verteilerfahrzeuge, durch die Verwendung unterschiedlicher Tür- und Wandblenden 6, 4 darzustellen. Für die Grundkörper der Fahrzeugtür 2 und der Seitenwand 13, 13' kann somit immer der gleiche Werkzeugsatz verwendet werden, wodurch die Produktionskosten gesenkt werden können.

Für die Herstellung der Seitenwände 13, 13' wird zweckmäßig ein Baukastensystem verwendet, das für die Fahrzeugtür 2 und die Wandabschnitte 16 gleichbleibende Basismodule bereitstellt, die mit den abgesetzten Außenblechen 27 bzw. 27' versehen sind. Desweiteren stellt das Baukastensystem, mehrere Varianten für die Türblenden 6 und die Wandblenden 4 bereit, die im wesentlichen beliebig mit den gleichbleibenden Basismodulen kombinierbar sind, um Fahrerkabinen 15 für Lastkraftwagen 1 mit jeweils unterschiedlichem Design und/oder Verwendungszweck herzustellen. Das Baukastenprinzip erhöht die Flexibilität in der Produktion und verringert die benötigte Lagerkapazität, wodurch Kosten gespart werden können.

## Patentansprüche

1. Fahrerkabine (15) für einen Lastkraftwagen (1), mit einer bezüglich der Fahrtrichtung linken und einer rechten Seitenwand (13,13'), die jeweils eine mit einem Seitenfenster (5) und mit einem Türaußengriff (7) ausgestattete Fahrzeugtür (2) sowie einen in Fahrtrichtung nach hinten daran anschließenden Wandabschnitt (16) aufweisen,
**dadurch gekennzeichnet,**
- **dass** jede Seitenwand (13,13') sowohl an der Fahrzeugtür (2) als auch am Wandabschnitt (16) jeweils ein Außenblech (27,27') aufweist, das jeweils zwischen dem Seitenfenster (5) und dem Türaußengriff (7) einen Absatz (3,3') besitzt,
- wobei sich die beiden Absätze (3,3') zueinander fluchtend in der jeweiligen Fahrzeugtür (2) und im zugehörigen Wandabschnitt (16) erstrecken,
- wobei die Absätze (3,3') die jeweilige Fahrzeugtür (2) und den zugehörigen Wandabschnitt (16) jeweils in einen oberen, weiter auskragenden Außenbereich (17) und einen unteren, nach innen versetzten Innenbereich (18) unterteilen,
- wobei der Innenbereich (18) der Fahrzeugtür (2) eine Türblende (6) trägt, während der Innenbereich (18) des Wandabschnitts (16) eine Wandblende (4) trägt.

2. Fahrerkabine nach Anspruch 1,
**dadurch gekennzeichnet,**
**dass** wenigstens eine Tür- oder Wandblende (6,4) als Kunststoff- und/oder Leichtmetallteil ausgebildet ist.

3. Fahrerkabine nach einem der Ansprüche 1 oder 2,
**dadurch gekennzeichnet,**
**dass** wenigstens eine Tür- oder Wandblende (6,4) mit geeigneten Befestigungsmitteln an der Fahrzeugtür (2) und/oder an dem Wandabschnitt (16) lösbar befestigt ist.

4. Fahrerkabine nach einem der Ansprüche 1 bis 3,
**dadurch gekennzeichnet,**
**dass** wenigstens eine Tür- oder Wandblende (6,4) als Seitenaufprallschutz ausgebildet ist.

5. Fahrerkabine nach einem der Ansprüche 1 bis 4,
**dadurch gekennzeichnet,**
**dass** zumindest eine Tür- oder Wandblende (6,4) einen Staukasten (25) enthält.

6. Fahrerkabine nach Anspruch 5,
**dadurch gekennzeichnet,**
**dass** in wenigstens eine Tür- oder Wandblende (6,4) eine schwenkverstellbare Klappe (23) integriert ist.

7. Fahrerkabine nach einem der Ansprüche 1 bis 6,
**dadurch gekennzeichnet,**
**dass** wenigstens eine Tür- oder Wandblende (6,4) als Designelement ausgebildet ist.

8. Fahrerkabine nach einem der Ansprüche 1 bis 7,
**dadurch gekennzeichnet,**
**dass** die Absätze (3,3') unmittelbar unterhalb des Seitenfensters (5) entlang laufend angeordnet sind.

9. Fahrerkabine nach einem der Ansprüche 1 bis 8,
**dadurch gekennzeichnet,**
**dass** an der Türblende (6) eine Aussparung für den Türaußengriff (7) vorgesehen ist.

10. Fahrerkabine nach einem der Ansprüche 1 bis 9,
**dadurch gekennzeichnet,**
**dass** die Fahrzeugtür (2) für verschiedene Fahrerkabinen-Typen unabhängig von der Tür- oder der Wandblende (6,4) ein das Außenblech (27) der Fahrzeugtür (2) umfassendes, gleiches Türgrundmodul mit einer gleichen, einen Kabineninnenraum gegen die Fahrzeugtür (2) abdichtenden, Türinnendichtung aufweist.

11. Fahrerkabine nach einem der Ansprüche 1 bis 10,
**dadurch gekennzeichnet,**
**dass** der Außenbereich (17) des Außenblechs (27,27') fluchtend zur Tür- oder Wandblende (6,4) ausgerichtet ist.

## Claims

1. Driver's cab (15) for a truck (1), comprising a left-hand and a right-hand side wall (13, 13') with respect to the direction of travel, each having a vehicle door (2) equipped with a side window (5) and an outer door handle (7) as well as a wall section (16) adjacent thereto to the rear in the travel direction, **characterised in that**
- each side wall (13, 13') has an outer panel (27, 27'), in each case, both on the vehicle door (2) and on the wall section (16), the outer panel in each case having a step (3, 3') between the side window (5) and the outer door handle (7),
- the two steps (3, 3') extending flush with one another in the respective vehicle door (2) and in the associated wall section (16),
- the steps (3, 3') dividing the respective vehicle door (2) and the associated wall section (16) into an upper, further projecting outer region (17) and a lower, inwardly offset inner region (18), in each case,
- the inner region (18) of the vehicle door (2) carrying a door panel (6), while the inner region (18) of the wall section (16) carries a wall panel (4).

2. Driver's cab according to claim 1, **characterised in that** at least one door or wall panel (6, 4) is designed as a plastics material and/or light metal part.

3. Driver's cab according to either of claims 1 or 2, **characterised in that** at least one door or wall panel (6, 4) is detachably fastened by suitable fastening means to the vehicle door (2) and/or to the wall section (16).

4. Driver's cab according to any one of claims 1 to 3, **characterised in that** at least one door or wall panel (6, 4) is designed as side impact protection.

5. Driver's cab according to any one of claims 1 to 4, **characterised in that** at least one door or wall panel (6, 4) contains a locker (25).

6. Driver's cab according to claim 5, **characterised in that** a pivotally adjustable flap (23) is integrated into at least one door or wall panel (6, 4).

7. Driver's cab according to any one of claims 1 to 6, **characterised in that** at least one door or wall panel (6, 4) is designed as a design element.

8. Driver's cab according to any one of claims 1 to 7, **characterised in that** the steps (3, 3') are arranged to run along directly below the side window (5).

9. Driver's cab according to any one of claims 1 to 8, **characterised in that** a recess for the outer door handle (7) is provided on the door panel (6).

10. Driver's cab according to any one of claims 1 to 9, **characterised in that** the vehicle door (2) has the same base door module comprising the outer panel (27) of the vehicle door (2), with the same inner door seal sealing a cabin interior against the vehicle door (2) for various driver's cab types independently of the door or the wall panel (6, 4).

11. Driver's cab according to any one of claims 1 to 10, **characterised in that** the outer region (17) of the outer panel (27, 27') is aligned flush with the door or wall panel (6, 4).

## Revendications

1. Cabine de conduite (15) pour un camion (1), comportant une paroi latérale gauche et droite (13, 13') par référence au sens de déplacement, qui comportent chacune une porte de véhicule (2), munie d'une fenêtre latérale (5) et d'une poignée de porte extérieure (7), ainsi qu'une partie de paroi (16) adjacente à ladite porte vers l'arrière par référence au sens de déplacement, **caractérisée en ce que**
- chaque paroi latérale (13, 13') comporte, sur la porte de véhicule (2), de même que sur la partie de paroi (16), une plaque en tôle extérieure (27, 27') qui comprend respectivement un décrochement (3, 3') entre la fenêtre latérale (5) et la poignée de porte extérieure (7),
- les deux décrochements (3, 3') s'étendant en alignement l'un avec l'autre dans la porte de véhicule (2) concernée et dans la partie de paroi (16) correspondante,
- les décrochements (3, 3') partageant la porte de véhicule (2) concernée et la partie de paroi (16) correspondante respectivement dans une zone extérieure (17) supérieure, davantage en saillie vers l'extérieur et une zone intérieure (18) inférieure, en retrait vers l'intérieur,
- la zone intérieure (18) de la porte de véhicule (2) portant un panneau de porte (6), alors que la zone intérieure (18) de la partie de paroi (16) porte un panneau formant paroi (4).

2. Cabine de conduite selon la revendication 1, **caractérisée en ce qu'**au moins un panneau de porte ou un panneau formant paroi (6, 4) est réalisé sous forme de pièce en matière plastique ou en métal allégé.

3. Cabine de conduite selon la revendication 1 ou 2, **caractérisée en ce qu'**au moins un panneau de porte ou un panneau formant paroi (6, 4) est fixé de manière amovible à la porte de véhicule (2) et/ou à la partie de paroi (16) avec des moyens de fixation appropriés.

4. Cabine de conduite selon l'une quelconque des revendications 1 à 3, **caractérisée en ce qu'**au moins un panneau de porte ou un panneau formant paroi (6, 4) est conçu sous forme de protection contre les collisions latérales.

5. Cabine de conduite selon l'une quelconque des revendications 1 à 4, **caractérisée en ce qu'**au moins un panneau de porte ou un panneau formant paroi (6, 4) comporte un caisson logement (25).

6. Cabine de conduite selon la revendication 5, **caractérisée en ce qu'**une trappe (23) réglable par pivotement est intégrée dans au moins un panneau de porte ou un panneau formant paroi (6, 4).

7. Cabine de conduite selon l'une quelconque des revendications 1 à 6, **caractérisée en ce qu'**au moins un panneau de porte ou un panneau formant paroi (6, 4) est conçu sous forme d'élément d'enjolivement.

8. Cabine de conduite selon l'une quelconque des revendications 1 à 7, **caractérisée en ce que** les décrochements (3, 3') sont agencés directement en dessous de la fenêtre latérale (5) en s'étendant le long de celle-ci.

9. Cabine de conduite selon l'une quelconque des revendications 1 à 8, **caractérisée en ce qu'**il est prévu sur le panneau de porte (6) un évidement pour la poignée de porte extérieure (7).

10. Cabine de conduite selon l'une quelconque des revendications 1 à 9, **caractérisée en ce que** la porte de véhicule (2) comporte, pour différents types de cabines de conduite, indépendamment du panneau de porte et du panneau formant paroi (6, 4), un module de base pour porte identique, comportant la plaque en tôle extérieure (27) de la porte de véhicule (2) et une garniture d'étanchéité intérieure de la porte identique pour assurer l'étanchéité entre l'habitacle intérieur de la cabine et la porte de véhicule (2).

11. Cabine de conduite selon l'une quelconque des revendications 1 à 10, **caractérisée en ce que** la zone extérieure (17) de la plaque en tôle extérieure (27, 27') est orientée en alignement avec le panneau de porte ou le panneau formant paroi (6, 4).
